# EUROPÄISCHE PATENTSCHRIFT

(11) **EP 2 462 686 B1**
(45) Veröffentlichungstag und Bekanntmachung des Hinweises auf die Patenterteilung: **22.02.2017**
(21) Anmeldenummer: 10720640.1
(22) Anmeldetag: 07.06.2010
(51) Int. Cl.: H02M 3/335

(54) **LADEVORRICHTUNG ZUM AUFLADEN EINES AKKUPACKS**
CHARGING DEVICE FOR CHARGING A BATTERY PACK
DISPOSITIF DE CHARGEMENT POUR CHARGER UNE BATTERIE D'ACCUMULATEURS

(30) Priorität: 07.08.2009 DE 102009028322
(43) Veröffentlichungstag der Anmeldung: 13.06.2012
(73) Patentinhaber: Robert Bosch GmbH, 70442 Stuttgart (DE)
(72) Erfinder: OSSWALD, Alexander, 70599 Stuttgart (DE)
(86) Internationale Anmeldenummer: PCT/EP2010/057877
(87) Internationale Veröffentlichungsnummer: WO 2011/015391

(56) Entgegenhaltungen:
- WO-A1-2006/061924
- DE-A1-102005 022 761
- DE-A1-102008 027 054
- US-A- 5 812 383
- US-A1- 2003 151 928
- US-A1- 2005 162 874
- US-A1- 2005 281 062
- US-A1- 2009 180 302

## Beschreibung

### Stand der Technik

Die vorliegende Erfindung betrifft eine Steuerschaltung für einen Schaltnetzteil-Transformator, der mindestens eine mit einem Leistungsschalter schaltbare Primärwicklung und mindestens eine erste Sekundärwicklung zur Erzeugung einer elektrischen Ausgangsspannung zum Betrieb eines elektrischen Verbrauchers aufweist. Die Ausgangsspannung weist eine von einer Steuereinheit vorgebbare erste Amplitude auf, die mit einem ersten Spannungsbegrenzungsregelkreis einstellbar ist, wobei der Transformator mindestens eine zweite Sekundärwicklung zur Erzeugung von mindestens einer elektrischen Hilfsspannung aufweist, die eine von der Steuereinheit vorgebbare zweite Amplitude aufweist, die mit einem zweiten Spannungsbegrenzungsregelkreis einstellbar ist, um eine einem Betrieb der Steuerschaltung zugeordnete Energiezufuhr von der Primärwicklung zu den Sekundärwicklungen in einem Bereitschaftsmodus der Steuerschaltung zumindest zu reduzieren. Der erste Spannungsbegrenzungsregelkreis weist ferner einen ersten Spannungsregler zur Einstellung der ersten Amplitude und der zweite Spannungsbegrenzungsregelkreis einen zweiten Spannungsregler zur Einstellung der zweiten Amplitude auf.

Die DE 10 2005 022 761 A1 beschreibt eine Ladevorrichtung mit einer zugeordneten Steuerschaltung, bei der der Schaltnetzteil-Transformator zur Durchführung eines Normalbetriebs bzw. eines Ladebetriebs Anwendung findet. Im Standby-Betrieb, bei dem die Ladevorrichtung in einem Bereitschaftsmodus betrieben wird, findet ein zusätzlicher, mit einem separaten Leistungsschalter schaltbarer Transformator Anwendung, der zur Erzeugung einer Versorgungsspannung für die Steuereinheit dient.

Aus der US 2005/0162874 A1 geht ein Schaltnetzteil zum Laden einer Batterie mit einem Transformator mit zwei Sekundärwicklungen hervor, wobei ein erster Spannungsregelkreis für eine Ausgangsspannung und ein zweiter Spannungsgregelkreis für eine Hilfsspannung vorgesehen sind. Bei geringer Last ist es möglich, das Schaltnetzteil im Standby zu betrieben.

Die US 5,812,383 offenbart ein Schaltnetzteil mit einem Transformator, bei dem ein von einer Steuereinheit angesteuerter Leistungsschalter eine Primärwicklung des Transformators ansteuert, um über eine Sekundärwicklung des Transformators eine elektrische Ausgangsspannung mit einer von einem ersten Spannungsbegrenzungsregelkreis vorgebbaren ersten Amplitude Amplitude einzustellen. Zur Erzeugung einer elektrischen Hilfsspannung weist der Transformator eine zweite Sekundärwicklung auf, die mit einem zweiten Spannungsregelkreis einstellbar ist, wobei zwischn der Primärwicklung und den Sekundärwicklungen eine Potentialtrennung vorgesehen ist.

Aus der WO 2006/061924 A1 ist ferner ein DC-DC-Konverter bekannt, bei dem die Regelung zweier von zwei Sekundärwicklungen erzeugter Ausgangsspannungen von einem gemeinsamen Controller übernommen wird.

### Offenbarung der Erfindung

Es ist Aufgabe der Erfindung, eine neue Ladevorrichtung zum Aufladen eines Akkupacks mit einer Steuerschaltung bereit zu stellen, die einen gegenüber dem Stand der Technik verringerten Eigenverbrauch einer Steuerschaltung für einen Schaltnetzteil-Transformator aufweist.

Dieses Problem wird dadurch gelöst dass ein Leistungsschalter der Steuerschaltung über ein Pulsweitenmodulationsmodul ansteuerbar ist, das zur Reduzierung der zugeordneten Energiezufuhr von der Primärwicklung zu den Sekundärwicklungen in einem Bereitschaftsmodus der Steuerschaltung von einem zweiten Spannungsregler ein- und ausschaltbar ist. Die Erfindung ermöglicht somit eine zuverlässige und sichere Ansteuerung des Leistungsschalters zur Reduzierung der zugeordneten Energiezufuhr im Bereitschaftsmodus der Steuerschaltung.

Der zweite Spannungsregler weist bevorzugt eine LED und/oder eine Z-Diode auf. Somit kann ein einfacher und kostengünstiger zweiter Spannungsregler bereitgestellt werden.

Zumindest einer der ersten und zweiten Spannungsbegrenzungsregelkreise ist über einen Optokoppler mit dem Pulsweitenmodulationsmodul verbunden. Somit kann eine einfache und wirksame Ansteuerung des Pulsweitenmodulationsmoduls realisiert werden, insbesondere bei einer Anwendung der Steuerschaltung in einer Vorrichtung mit Potentialtrennung.

Gemäß einer Ausführungsform ist die Steuereinheit mit einer von der elektrischen Hilfsspannung ableitbaren Versorgungsspannung betreibbar, wobei der zweite Spannungsbegrenzungsregelkreis dazu ausgebildet ist, eine der Versorgungsspannung zugeordnete Amplitude zumindest zu reduzieren. Die Erfindung ermöglicht somit im Bereitschaftsmodus der Steuerschaltung einen Betrieb der Steuereinheit mit einer Versorgungsspannung mit reduzierter Amplitude, sodass eine der Ladevorrichtung im Bereitschaftsmodus zugeordnete Verlustleistung auf einfache Art und Weise zumindest reduziert werden kann.

Der zweite Spannungsbegrenzungsregelkreis ist bevorzugt dazu ausgebildet, die der Versorgungsspannung zugeordnete Amplitude bis zu einem für eine Betriebsbereitschaft der Steuereinheit erforderlichen Minimalwert zu reduzieren. Somit kann die der Ladevorrichtung im Bereitschaftsmodus zugeordnete Verlustleistung minimiert werden.

Der zweite Spannungsbegrenzungsregelkreis ist bevorzugt dazu ausgebildet, die erste Amplitude im Bereitschaftsmodus der Steuerschaltung zumindest zu reduzieren. Die Erfindung ermöglicht somit eine einfache und effiziente Reduzierung der der Steuerschaltung im Bereitschaftsmodus zugeordneten Verlustleistung.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
Fig. 1 ein vereinfachtes Prinzipschaltbild einer Ladevorrichtung mit einer Steuerschaltung gemäß einer Ausführungsform, und
Fig. 2 ein vereinfachtes Schaltbild einer beispielhaften Realisierung der Ladevorrichtung von Fig. 1.

### Beschreibung der Ausführungsbeispiele

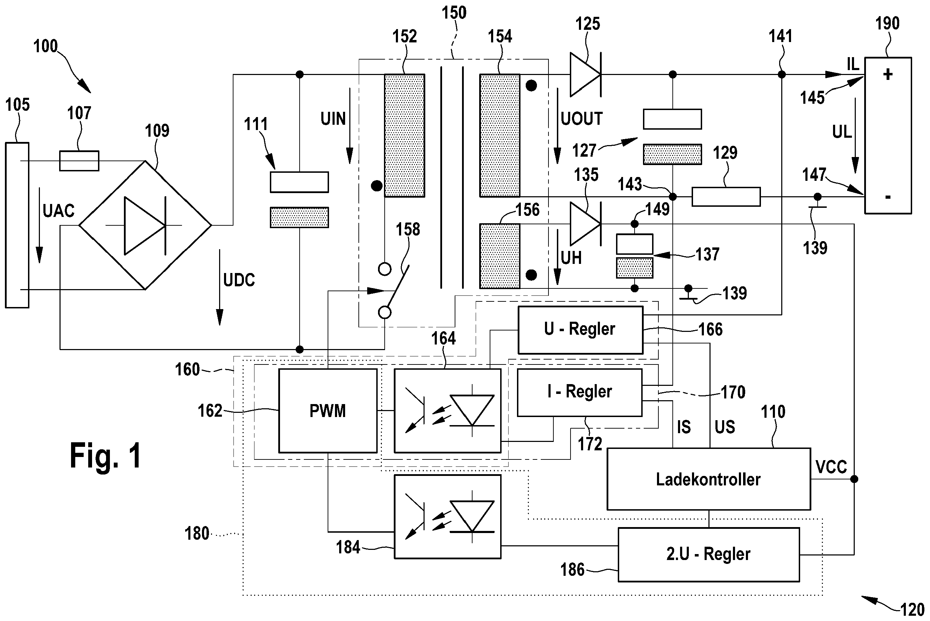

Fig. 1 zeigt schematisch eine Ladevorrichtung 100 zum Aufladen eines Akkupacks 190, mit einem Schaltnetzteil-Transformator 150, der aus einer elektrischen Eingangsspannung UIN eine elektrische Ausgangsspannung UOUT und eine Hilfsspannung UH erzeugt. Der Ladevorrichtung 100 ist gemäß einer Ausführungsform eine Steuerschaltung 120 zur Steuerung einer dem Transformator 150 zugeführten elektrischen Energie zugeordnet.

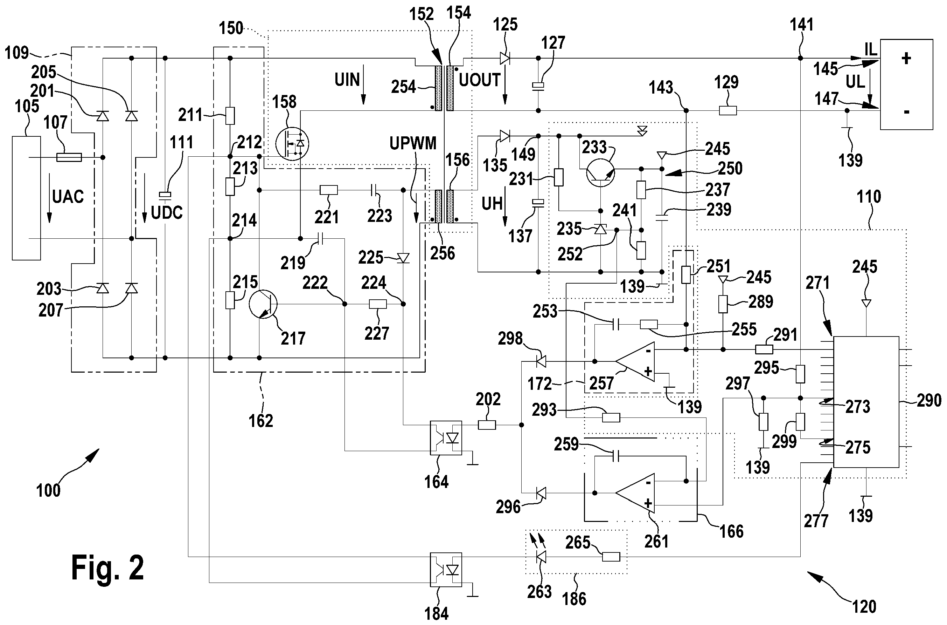

Eine beispielhafte Realisierung der Ladevorrichtung 100 ist unten stehend bei Fig. 2 im Detail beschrieben. Es wird jedoch darauf hingewiesen, dass die Beschreibung der Verwendung der Steuerschaltung 120 bei der Ladevorrichtung 100 lediglich beispielhaften Charakter hat und nicht zur Einschränkung der Erfindung dient. Vielmehr kann die Steuerschaltung 120 z. B. in jeglicher Art von Netzgerät bzw. Netzteil Anwendung finden, in dem ein Schaltnetzteil-Transformator zur Erzeugung einer elektrischen Ausgangsspannung zum Betrieb eines elektrischen Verbrauchers verwendet wird. Beispielsweise könnte die Steuerschaltung 120 in einem Netzteil eines tragbaren Computers Anwendung finden, bei dem das Netzteil in einen Standby-Betrieb umschaltbar ist, für den Fall, dass der Computer ausgeschaltet und ein diesem zugeordneter Akkupack aufgeladen ist.

Gemäß einer Ausführungsform ist die Ladevorrichtung 100 zur Spannungsversorgung mit einer Eingangsspannungsquelle 105 verbunden, die beispielhaft als Wechselspannungsquelle ausgebildet ist. Es ist jedoch ebenso möglich, die Ladevorrichtung 100 an einer Gleichspannungsquelle zu betreiben, wozu einfache, eingangsseitige Modifizierungen der in Fig. 1 abgebildeten Schaltung erforderlich sein können, die dem Fachmann geläufig sind.

Die Eingangsspannungsquelle 105 ist über eine Sicherung 107, z. B. eine Glasrohrsicherung, mit einem Brückengleichrichter 109 verbunden, der eine von der Eingangsspannungsquelle 105 bereitgestellte Wechselspannung UAC in eine Eingangsgleichspannung UDC umwandelt. Der Brückengleichrichter 109 ist ausgangsseitig mit einem Elektrolytkondensator 111 verbunden, der zur Glättung der Eingangsgleichspannung UDC ausgebildet ist. Seine Anode ist mit einem Ende einer Primärwicklung 152 des Schaltnetzteil-Transformators 150 verbunden und seine Kathode ist über einen Leistungsschalter 158 mit dem anderen Ende der Primärwicklung 152 verbunden. Der Leistungsschalter 158 dient zum Takten der Primärwicklung 152, an der die von dem Elektrolytkondensator 111 geglättete Eingangsspannung UIN anliegt, und ist mit einem Pulsweitenmodulationsmodul (PWM-Modul) 162 aktivierbar bzw. ansteuerbar.

Die Primärwicklung 152 überträgt eine ihr mit der Eingangsspannung UIN zugeführte Energie an mindestens eine erste Sekundärwicklung 154, die nachfolgend auch als "Sekundärhauptwicklung" bezeichnet wird. Die Sekundärhauptwicklung 154 dient zur Erzeugung der elektrischen Ausgangsspannung UOUT, aus der beispielhaft eine Ladespannung UL zum Aufladen des Akkupacks 190 ableitbar ist, die z. B. in einem Spannungsbereich von 12 V bis 42 V liegt. Hierzu ist ein Ende der Sekundärhauptwicklung 154 mit einer Anode einer Diode 125 verbunden, deren Kathode einerseits mit der Anode eines Elektrolytkondensators 127 und andererseits mit einem Knotenpunkt 141 verbunden ist. Dieser ist mit einem ersten Spannungsregler 166 und über einen ersten Anschluss 145 z. B. mit einem Pluspol des Akkupacks 190 verbunden. Das andere Ende der Sekundärhauptwicklung 154 ist mit einem Knotenpunkt 143 verbunden. Dieser ist mit einem Stromregler 172, der Kathode des Elektrolytkondensators 127 und einem ohmschen Widerstand 129 verbunden, der seinerseits mit Masse 139 und über einen zweiten Anschluss 147 z. B. mit einem Minuspol des Akkupacks 190 verbunden ist.

Die Bauteile 125, 127 bilden beispielhaft einen Sperrwandler für die Ladevorrichtung 100, wobei der Elektrolytkondensator 127 zur Glättung der Ausgangsspannung UOUT dient, sodass am Akkupack 190 die geglättete Ladespannung UL anliegt. Es wird jedoch darauf hingewiesen, dass die Realisierung eines Sperrwandlers lediglich beispielhaften Charakter hat und nicht als Einschränkung der Erfindung dient, da diese z. B. auch mit einem Durchflusswandler realisierbar ist. Darüber hinaus ist auch die Ausgestaltung der Bauteile 125, 127 variierbar. Z. B. kann anstelle des Elektrolytkondensators 127 ein geeigneter, ausreichend groß dimensionierter Folienkondensator Anwendung finden.

Gemäß einer Ausführungsform überträgt die Primärwicklung 152 die ihr zugeführte Energie auch an eine zweite Sekundärwicklung 156, die nachfolgend auch als "Sekundärnebenwicklung" bezeichnet wird. Die Sekundärnebenwicklung 156 dient zur Erzeugung der Hilfsspannung UH, die bevorzugt etwa 10 V beträgt. Ein Ende der Sekundärnebenwicklung 156 ist mit einer Anode einer Diode 135 verbunden, deren Kathode mit einem Knotenpunkt 149 verbunden ist. Das andere Ende der Sekundärnebenwicklung 156 ist mit der Kathode eines Elektrolytkondensators 137 und mit Masse 139 verbunden.

Die Bauteile 135, 137 bilden mit dem Schaltnetzteil-Transformator 150 beispielhaft einen Durchflusswandler, wobei der Elektrolytkondensator 137 zur Glättung der Hilfsspannung UH dient. Es wird jedoch darauf hingewiesen, dass die Realisierung eines Durchflusswandlers lediglich beispielhaften Charakter hat und nicht als Einschränkung der Erfindung dient, da diese wie oben beschrieben z. B. auch mit einem Sperrwandler realisierbar ist. Darüber hinaus ist auch die Ausgestaltung der Bauteile 135, 137 wie die oben beschriebene Ausgestaltung der Bauteile 125, 127 variierbar.

Gemäß einer Ausführungsform ist der eingangsseitig mit dem Knotenpunkt 141 verbundene erste Spannungsregler 166 darüber hinaus eingangsseitig mit einer Steuereinheit 110 und ausgangsseitig mit einem ersten Optokoppler 164 verbunden. Der eingangsseitig mit dem Knotenpunkt 143 verbundene Stromregler 172 ist darüber hinaus eingangsseitig ebenfalls mit der Steuereinheit 110 und ausgangsseitig ebenfalls mit dem ersten Optokoppler 164 verbunden. Der erste Optokoppler 164 ist mit dem PWM-Modul 162 verbunden.

Das PWM-Modul 162, der Optokoppler 164 und der erste Spannungsregler 166 bilden beispielhaft einen ersten Spannungsbegrenzungsregelkreis 160 zur Begrenzung einer Amplitude der Ausgangsspannung UOUT und somit der bei einem Ladevorgang am Akkupack 190 anliegenden Ladespannung UL. Das PWM-Modul 162, der Optokoppler 164 und der Stromregler 172 bilden beispielhaft einen Strombegrenzungsregelkreis 170 zur Begrenzung eines bei einem Ladevorgang dem Akkupack 190 zugeführten Ladestroms IL. Die Regelkreise 160, 170 sind sekundärseitig zum Transformator 150 angeordnet und können deshalb auch als sekundäre Regelkreise bezeichnet werden.

Die Steuereinheit 110 ist beispielhaft als Ladekontroller ausgeführt. Dieser ist bevorzugt dazu ausgebildet, einen dem zu ladenden Akkupack 190 zugeordneten Akkutyp sowie einen Betriebszustand der Ladevorrichtung 100, z. B. einen Betrieb im Leerlauf und mit oder ohne angeschlossenem Akkupack 190, zu erkennen und in Abhängigkeit von einem jeweils erkannten Akkutyp bzw. Betriebszustand den ersten Spannungsregler 166 und/oder den Stromregler 172 anzusteuern. Da die Funktionsweise sowie eine Realisierung eines geeigneten Ladekontrollers einem Fachmann ausreichend bekannt ist, wird hier auf eine eingehende Beschreibung des Ladekontrollers 110 verzichtet.

Der Ladekontroller 110 ist eingangsseitig mit dem Knotenpunkt 149 verbunden, über den eine von der Hilfsspannung UH abgeleitete Versorgungsspannung VCC an den Ladekontroller 110 angelegt wird. Dieser ist ausgangsseitig des Weiteren mit einem zweiten Spannungsregler 186 verbunden, der darüber hinaus eingangsseitig ebenfalls mit dem Knotenpunkt 149 verbunden ist. Der zweite Spannungsregler 186 ist z. B. mit einer LED und/oder einer Z-Diode realisierbar und ist ausgangsseitig über einen zweiten Optokoppler 184 mit dem PWM-Modul 162 verbunden.

Das PWM-Modul 162, der Optokoppler 184 und der zweite Spannungsregler 186 bilden beispielhaft einen zweiten Spannungsbegrenzungsregelkreis 180 zur Begrenzung der im Standby-Betrieb am Ladekontroller 110 anliegenden Versorgungsspannung VCC. Da auch der Regelkreis 180 sekundärseitig zum Transformator 150 angeordnet ist, kann dieser ebenfalls als sekundärer Regelkreis bezeichnet werden.

Im Betrieb der Ladevorrichtung 100 bestimmt der Ladekontroller 110, ob der Akkupack 190 an die Anschlüsse 145, 147 angeschlossen ist und aufzuladen ist. Falls ein entsprechender Ladevorgang durchzuführen ist, initiiert der Ladekontroller 110 einen Ladebetrieb und bestimmt einen dem Akkupack 190 zugeordneten Akkutyp. Dann gibt der Ladekontroller 110 z. B. in Abhängigkeit von dem bestimmten Akkutyp einen geeigneten Ausgangs- bzw. Ladespannungssollwert US zum Aufladen des Akkupacks 190 an den ersten Spannungsregler 166 aus, beispielsweise US = 42 V. Alternativ hierzu kann auch ein erster Ausgangs- bzw. Ladestromsollwert IS an den Stromregler 172 ausgegeben werden.

Der Spannungsregler 166 steuert nun über den Optokoppler 164 und das PWM-Modul 160 den Leistungsschalter 158 derart an, dass der Primärhauptwicklung 152 derart Energie zugeführt wird, dass die von der Sekundärhauptwicklung 154 erzeugte Ausgangsspannung UOUT eine dem Ladespannungssollwert US entsprechende Amplitude aufweist. Somit weist die Ausgangsspannung UOUT eine von der Steuereinheit 110 vorgebbare erste Amplitude auf, die mit dem ersten Spannungsregler 166 des ersten Spannungsbegrenzungsregelkreises 160 einstellbar ist. Gleichzeitig weist die von der Sekundärnebenwicklung 156 erzeugte Hilfsspannung UH eine zweite Amplitude auf, die wie oben beschrieben bevorzugt etwa 10 V beträgt. Diese Hilfsspannung UH = 10 V wird z. B. über ein von dem Ladekontroller 110 implementiertes Spannungsanpassungsmodul 250 (Fig. 2) auf die im Ladebetrieb zum Betrieb des Ladekontrollers 110 erforderliche Versorgungsspannung VCC von etwa z. B. VCC = 5 V herab gesetzt.

Falls kein Ladevorgang durchzuführen ist, bzw. nach dem Ladebetrieb, geht die Ladevorrichtung 100 in einen Bereitschaftsmodus bzw. einen Standby-Betrieb über. In diesem Bereitschaftsmodus kann der Ladekontroller 110 mit einer reduzierten Versorgungsspannung VCC betrieben werden, bei der nur noch eine volle Funktionsfähigkeit des Ladekontrollers 110 zu gewährleisten ist. Deshalb weist der Ladekontroller 110 gemäß einer Ausführungsform den zweiten Spannungsregler 186 und somit den zweiten Spannungsbegrenzungsregelkreis 180 im Bereitschaftsmodus an, die von der Sekundärnebenwicklung 156 erzeugte Hilfsspannung UH und somit eine der Versorgungsspannung VCC zugeordnete Amplitude zu reduzieren und bevorzugt auf einen zur Erhaltung der vollen Funktionsfähigkeit erforderlichen Minimalwert einzustellen, z. B. VCC = 3 V, um somit eine entsprechende Leistungsaufnahme der Ladevorrichtung 100 im Standby-Betrieb zu reduzieren bzw. zu minimieren.

Zur Reduzierung der Hilfsspannung UH steuert der zweite Spannungsregler 186 über den Optokoppler 184 das PWM-Modul 162 beispielsweise in einem Pulspaketbetrieb an, in dem dieses z. B. den Leistungsschalter 158 ein- und ausschaltet, sodass die Leistungsaufnahme der Primärwicklung 152 reduziert bzw. minimiert wird und somit auch die Amplitude der von der Sekundärnebenwicklung 156 erzeugten Hilfsspannung UH. Auf analoge Art und Weise kann auch eine von der Sekundärhauptwicklung 154 erzeugte Leerlaufspannung bzw. die der Ausgangsspannung UOUT zugeordnete erste Amplitude reduziert bzw. minimiert werden.

Alternativ hierzu kann auch das PWM-Modul 162 zur Reduzierung der Hilfsspannung auf geeignete Art und Weise vollständig ein- und ausgeschaltet werden. Beispielsweise kann hierzu eine zum Betrieb des PWM-Moduls 162 vorgesehene Hilfsspannungsquelle 256 (Fig. 2) und somit das PWM-Modul 162 vollständig ein- und ausgeschaltet werden. Auch ist es möglich, über den Optokoppler 184 unmittelbar auf den Leistungsschalter 158 zuzugreifen, um diesen auf geeignete Art und Weise zur Reduzierung der Hilfsspannung anzusteuern.

Gemäß einer Ausführungsform schließt der Optokoppler 184 bei einer Versorgungsspannung von VCC < 3 V, sodass das PWM-Modul 162 in einen dem Normalbetrieb bzw. Ladebetrieb der Ladevorrichtung 100 zugeordneten Betriebszustand übergeht und somit die Energiezufuhr von der Primärwicklung 152 zu den Sekundärwicklungen 154, 156 erhöht wird, sodass die Amplitude der von der Sekundärnebenwicklung 156 erzeugten Hilfsspannung UH und somit die Amplitude der Versorgungsspannung VCC wieder vergrößert wird. Übersteigt diese dann den Wert von 3 V, schaltet der zweite Optokoppler 184 wieder leitend und bewirkt erneut eine Reduzierung dieser Amplitude, wie oben beschrieben.

Fig. 2 zeigt eine Ausführungsform der Ladevorrichtung 100 von Fig. 1, bei der beispielhafte Realisierungen des Brückengleichrichters 109, des Ladekontrollers 110, des Schaltnetzteil-Transformators 150, des PWM-Moduls 162, des ersten Spannungsreglers 166, des Stromreglers 172 und des zweiten Spannungsreglers 186 Anwendung finden. Wie bei Fig. 1 beschrieben, bilden die Baugruppen bzw. -teile 162, 164, 166 den ersten sekundären Spannungsbegrenzungsregelkreis 160, die Baugruppen bzw. -teile 162, 164, 172 den sekundären Strombegrenzungsregelkreis 170 und die Baugruppen bzw. -teile 162, 184, 186 den zweiten sekundären Spannungsbegrenzungsregelkreis 180, die zur Vereinfachung der Darstellung in Fig. 2 nicht separat abgebildet sind. Es wird jedoch darauf hingewiesen, dass die dargestellte Realisierung dieser Komponenten lediglich beispielhaften Charakter hat, da der Fachmann in der Lage ist, diese auf vielfältige Arten und Weisen zu modifizieren, ohne hierbei deren erfindungsgemäße Funktionsweise zu verändern.

Der Brückengleichrichter 109 ist beispielhaft mit vier Dioden 201, 203, 205, 207 ausgebildet, wobei die Anode der Diode 201 mit der Sicherung 107 und der Kathode der Diode 203 verbunden ist. Ihre Kathode ist mit der Kathode der Diode 205 und mit der Anode des Elektrolytkondensators 111 verbunden. Die Anode der Diode 205 ist mit der Eingangsspannungsquelle 105 und der Kathode der Diode 207 verbunden. Deren Anode ist mit der Anode der Diode 203 und der Kathode des Elektrolytkondensators 111 verbunden.

Der Ladekontroller 110 hat beispielhaft einen Widerstand 231, der zwischen dem Knotenpunkt 149 und der Kathode einer Referenzdiode 235 sowie der Basis eines NPN-Bipolartransistors 233 angeordnet ist. Der Kollektor des Transistors 233 ist ebenfalls mit dem Knotenpunkt 149 verbunden, sein Emitter einerseits über einen Widerstand 237 mit einem Knotenpunkt 252 und andererseits mit einem Anschluss 245 sowie einer Elektrode eines Kondensators 239. Die andere Elektrode des Kondensators 239 ist mit Masse 139, der Anode der Referenzdiode 235 und über einen Widerstand 241 mit dem Knotenpunkt 252 verbunden. Dieser ist ebenfalls mit einem Steueranschluss der Referenzdiode 235 verbunden. Diese Bauteile des Ladekontrollers 110 bilden wie bei Fig. 1 erwähnt das Spannungsanpassungsmodul 250, das die von der Sekundärnebenwicklung 156 erzeugte Hilfsspannung von z. B. etwa 10 V in die Versorgungsspannung VCC von z. B. etwa 5 V umwandelt, die am Anschluss 245 abgreifbar ist.

Der Knotenpunkt 252 ist über einen Widerstand 293 mit dem ersten Spannungsregler 166 zur Vorgabe eines Ausgangsspannungs-Sollwerts für die an der Sekundärhauptwicklung 154 zu erzeugende Ausgangsspannung UOUT bzw. die Ladespannung UL verbunden. Die am Anschluss 245 abgreifbare Versorgungsspannung VCC wird zur Vorgabe eines Ladestrom-Sollwerts für den Ladestrom IL über einen Widerstand 289 an den Stromregler 172 angelegt und über einen mit dem Widerstand 289 verbundenen Widerstand 291 an einen ersten Ausgang 271 eines ebenfalls dem Ladekontroller 110 zugeordneten Mikroprozessors 290, der über Masse 139 geerdet ist. Diesem wird über den Anschluss 245 die Versorgungsspannung VCC zum Betrieb zugeführt.

Ein zweiter Ausgang 273 des Mikroprozessors 290 ist über einen Widerstand 295 mit dem Knotenpunkt 141, über einen Widerstand 299 mit einem dritten Ausgang 275 des Mikroprozessors 290, über einen Widerstand 297 mit Masse 139 und mit dem ersten Spannungsregler 166 verbunden. Ein vierter Ausgang 277 des Mikroprozessors 290 ist mit dem zweiten Spannungsregler 186 verbunden.

Der Schaltnetzteil-Transformator 150 hat beispielhaft die Primärwicklung 152, die gemäß einer Ausführungsform eine Primärhauptwicklung 254 und eine Primärnebenwicklung 256 aufweist, die Sekundärwicklungen 154, 156, sowie den als Halbleiterschalter, z. B. als Feldeffekttransistor vom n-Kanal-MOSFET-Typ, ausgebildeten Leistungsschalter 158. Dessen Gate-Anschluss ist mit einem dem PWM-Modul 162 zugeordneten Knotenpunkt 212 verbunden und sein Source-Anschluss mit einem dem PWM-Modul 162 zugeordneten Knotenpunkt 214. Der Drain-Anschluss des n-Kanal-MOSFET 158 ist mit der Primärhauptwicklung 254 verbunden.

An der Primärhauptwicklung 254 liegt wie bei Fig. 1 beschrieben die Eingangsspannung UIN an. Die Primärnebenwicklung 256 steht in Wirkverbindung mit dieser Primärhauptwicklung 254 und dient zur Erzeugung einer Betriebsspannung UPWM zum Betrieb des PWM-Moduls 162.

Das PWM-Modul 162 hat beispielhaft den über einen Vorwiderstand 211 mit der Anode des Elektrolytkondensators 111 verbundenen Knotenpunkt 212, der darüber hinaus über einen Hauptwiderstand 213 mit einem Knotenpunkt 214 verbunden ist, der wiederum über einen Shunt-Widerstand 215 mit der Kathode des Elektrolytkondensators 111 verbunden ist. Diese ist des Weiteren mit einem Ende der Primärnebenwicklung 256 und mit dem Emitter eines NPN-Bipolartransistors 217 verbunden, dessen Kollektor mit dem Knotenpunkt 212 und dessen Basis mit einem Knotenpunkt 222 verbunden ist. Dieser ist einerseits über einen Kondensator 219 mit dem Knotenpunkt 214 und andererseits über einen Widerstand 227 mit einem Knotenpunkt 224 verbunden, der darüber hinaus mit der Kathode einer Diode 225 verbunden ist. Deren Anode ist einerseits mit dem anderen Ende der Primärnebenwicklung 256 und andererseits über eine Reihenschaltung eines Kondensators 223 und eines Widerstands 221 mit dem Knotenpunkt 212 verbunden.

Das PWM-Modul 162 ist in Fig. 2 beispielhaft selbstoszillierend ausgebildet, mit analogen Bauteilen. Alternativ hierzu ist auch eine diskrete Ausbildung, z. B. mit einem geeigneten Mikroprozessor, möglich.

Der erste Spannungsregler 166 hat beispielhaft einen Operationsverstärker 261, dessen invertierender Eingang einerseits mit dem Widerstand 293 und andererseits über einen Kondensator 259 mit seinem Ausgang verbunden ist, der den Ausgang des Spannungsreglers 166 definiert. Der nicht-invertierende Eingang des Operationsverstärkers 261 ist mit dem zweiten Ausgang 273 des dem Ladekontroller 110 zugeordneten Mikroprozessors 290 verbunden. Der erste Spannungsregler 166 ist ausgangsseitig mit der Anode einer Diode 296 verbunden.

Der Stromregler 172 hat beispielhaft einen Operationsverstärker 257, dessen nicht-invertierender Eingang mit Masse 139 verbunden ist. Sein invertierender Eingang ist über den dem Ladekontroller 110 zugeordneten Widerstand 291 mit dem ersten Ausgang 271 von dessen Mikroprozessor 290 verbunden. Darüber hinaus ist der invertierende Eingang des Operationsverstärkers 257 über einen Widerstand 251 mit dem Knotenpunkt 143 und über eine Reihenschaltung aus einem Widerstand 255 und einem Kondensator 253 mit dem Ausgang des Operationsverstärkers 257 verbunden, der den Ausgang des Stromreglers 172 definiert. Dieser ist mit der Anode einer Diode 298 verbunden.

Die Kathoden der Dioden 296, 298 sind über einen Widerstand 202 mit einer Eingangsseite des Optokopplers 164 verbunden, der ausgangsseitig mit den dem PWM-Modul 162 zugeordneten Knotenpunkten 222, 224 verbunden ist. Die Dioden 296, 298 können z. B. als LED ausgeführt sein und dienen zur Entkopplung der Regler 166, 172.

Der zweite Spannungsregler 186 hat einen mit dem vierten Ausgang des dem Ladekontroller 110 zugeordneten Mikroprozessors 290 verbundenen Widerstand 265, der darüber hinaus mit der Anode einer LED 263 verbunden ist. Deren Kathode ist mit einer Eingangsseite des Optokopplers 184 verbunden, der ausgangsseitig mit den dem PWM-Modul 162 zugeordneten Knotenpunkten 212, 214 verbunden ist.

Die Funktionalität der Ladevorrichtung 100 wurde bereits bei Fig. 1 eingehend beschrieben. Auch ist die Funktionalität der einzelnen Komponenten von Fig. 2 dem Fachmann geläufig, sodass hier zwecks Knappheit der Beschreibung auf eine detaillierte Beschreibung der Funktionsweise der in Fig. 2 gezeigten, beispielhaften Ausführungsform der Ladevorrichtung 100 verzichtet werden kann.

## Patentansprüche

1. Steuerschaltung (120) für einen Schaltnetzteil-Transformator (150), der mindestens eine mit einem Leistungsschalter (158) schaltbare Primärwicklung (152) und mindestens eine erste Sekundärwicklung (154) zur Erzeugung einer elektrischen Ausgangsspannung (UOUT) zum Betrieb eines elektrischen Verbrauchers (190) aufweist, wobei die Ausgangsspannung (UOUT) eine von einer Steuereinheit (110) vorgebbare erste Amplitude aufweist, die mit einem ersten Spannungsbegrenzungsregelkreis (160) einstellbar ist, wobei der Transformator (150) mindestens eine zweite Sekundärwicklung (156) zur Erzeugung von mindestens einer elektrischen Hilfsspannung (UH) aufweist, die eine von der Steuereinheit (110) vorgebbare zweite Amplitude aufweist, die mit einem zweiten Spannungsbegrenzungsregelkreis (180) einstellbar ist, um eine einem Betrieb der Steuerschaltung (120) zugeordnete Energiezufuhr von der Primärwicklung (152) zu den Sekundärwicklungen (154, 156) in einem Bereitschaftsmodus der Steuerschaltung (120) zumindest zu reduzieren, und wobei der erste Spannungsbegrenzungsregelkreis (160) einen ersten Spannungsregler (166) zur Einstellung der ersten Amplitude aufweist und der zweite Spannungsbegrenzungsregelkreis (180) einen zweiten Spannungsregler (186) zur Einstellung der zweiten Amplitude aufweist, **dadurch gekennzeichnet, dass** der Leistungsschalter (158) über ein Pulsweitenmodulationsmodul (162) ansteuerbar ist, das zur Reduzierung der zugeordneten Energiezufuhr von der Primärwicklung (152) zu den Sekundärwicklungen (154, 156) in einem Bereitschaftsmodus der Steuerschaltung (120) von dem zweiten Spannungsregler (186) ein- und ausschaltbar ist.

2. Steuerschaltung nach Anspruch 1, **dadurch gekennzeichnet, dass** der zweite Spannungsregler (186) eine LED aufweist.

3. Steuerschaltung nach einem der vorhergehenden Ansprüche, **dadurch gekennzeichnet, dass** der zweite Spannungsregler (186) eine Z-Diode aufweist.

4. Steuerschaltung nach Anspruch 1, **dadurch gekennzeichnet, dass** zumindest einer der ersten und zweiten Spannungsbegrenzungsregelkreise (160, 180) über einen Optokoppler (164, 184) mit dem Pulsweitenmodulationsmodul (162) verbunden ist.

5. Steuerschaltung nach einem der vorhergehenden Ansprüche, **dadurch gekennzeichnet, dass** die Steuereinheit (110) mit einer von der elektrischen Hilfsspannung (UH) ableitbaren Versorgungsspannung (VCC) betreibbar ist, wobei der zweite Spannungsbegrenzungsregelkreis (180) dazu ausgebildet ist, eine der Versorgungsspannung (VCC) zugeordnete Amplitude zumindest zu reduzieren.

6. Steuerschaltung nach einem der vorhergehenden Ansprüche, **dadurch gekennzeichnet, dass** der zweite Spannungsbegrenzungsregelkreis (180) dazu ausgebildet ist, die der Versorgungsspannung (VCC) zugeordnete Amplitude bis zu einem für eine Betriebsbereitschaft der Steuereinheit (110) erforderlichen Minimalwert zu reduzieren.

7. Steuerschaltung nach einem der vorhergehenden Ansprüche, **dadurch gekennzeichnet, dass** der zweite Spannungsbegrenzungsregelkreis (180) dazu ausgebildet ist, die erste Amplitude im Bereitschaftsmodus der Steuerschaltung (120) zumindest zu reduzieren.

## Claims

1. Control circuit (120) for a switched-mode power supply transformer (150) having at least one primary winding (152) switchable by a power switch (158) and at least one first secondary winding (154) for generating an electrical output voltage (UOUT) for operating an electrical load (190), wherein the output voltage (UOUT) has a first amplitude which is predefinable by a control unit (110) and which is adjustable by a first voltage limiting regulating circuit (160), wherein the transformer (150) has at least one second secondary winding (156) for generating at least one electrical auxiliary voltage (UH) having a second amplitude which is predefinable by the control unit (110) and which is adjustable by a second voltage limiting regulating circuit (180) in order at least to reduce an energy supply associated with operation of the control circuit (120) from the primary winding (152) to the secondary windings (154, 156) in a standby mode of the control circuit (120), and wherein the first voltage limiting regulating circuit (160) has a first voltage regulator (166) for adjusting the first amplitude and the second voltage limiting regulating circuit (180) has a second voltage regulator (186) for adjusting the second amplitude, **characterized in that** the power switch (158) is driveable via a pulse width modulation module (162) that can be switched on and off by the second voltage regulator (186) in order to reduce the assigned energy supply from the primary winding (152) to the secondary windings (154, 156) in a standby mode of the control circuit (120).

2. Control circuit according to Claim 1, **characterized in that** the second voltage regulator (186) has an LED.

3. Control circuit according to either of the preceding claims, **characterized in that** the second voltage regulator (186) has a zener diode.

4. Control circuit according to Claim 1, **characterized in that** at least one of the first and second voltage limiting regulating circuits (160, 180) is connected to the pulse width modulation module (162) via an optocoupler (164, 184).

5. Control circuit according to any of the preceding claims, **characterized in that** the control unit (110) is operable with a supply voltage (VCC) derivable from the electrical auxiliary voltage (UH), wherein the second voltage limiting regulating circuit (180) is configured to at least reduce an amplitude assigned to the supply voltage (VCC).

6. Control circuit according to any of the preceding claims, **characterized in that** the second voltage limiting regulating circuit (180) is configured to reduce the amplitude assigned to the supply voltage (VCC) down to a minimum value required for an operational readiness of the control unit (110).

7. Control circuit according to any of the preceding claims, **characterized in that** the second voltage limiting regulating circuit (180) is configured to at least reduce the first amplitude in the standby mode of the control circuit (120).

## Revendications

1. Circuit de commande (120) destiné à un transformateur de bloc d'alimentation (150), comportant au moins un enroulement primaire (152) pouvant être connecté à un commutateur de puissance (158) et au moins un premier enroulement secondaire (154) destiné à générer une tension de sortie électrique (UOUT) pour mettre en fonctionnement une charge électrique (190), dans lequel la tension de sortie (UOUT) présente une première amplitude pouvant être prédéterminée par une unité de commande (110), laquelle première amplitude peut être réglée au moyen d'un premier circuit régulateur à limitation de tension (160), dans lequel le transformateur (150) comporte au moins un deuxième enroulement primaire (156) destiné à générer au moins une tension électrique auxiliaire (UH) qui présente une deuxième amplitude pouvant être prédéterminée par l'unité de commande (110), laquelle deuxième amplitude peut être réglée au moyen d'un deuxième circuit régulateur à limitation de tension (180) afin de réduire au moins un transfert d'énergie associé à un fonctionnement du circuit de commande (120) de l'enroulement primaire (152) aux enroulements secondaires (154, 156) dans un mode de préparation du circuit de commande (120), et dans lequel le premier circuit régulateur à limitation de tension (160) comporte un premier régulateur de tension (166) destiné à régler la première amplitude et le deuxième circuit régulateur à limitation de tension (180) comporte un deuxième régulateur de tension (186) destiné à régler la deuxième amplitude, **caractérisé en ce que** le commutateur de puissance (158) peut être commandé par l'intermédiaire d'un module de modulation d'impulsions en largeur (162) qui peut être activé et désactivé par le deuxième régulateur de tension (186) afin de réduire le transfert d'énergie de l'enroulement primaire (152) aux enroulements secondaires (154, 156) dans un mode de préparation du circuit de commande (120).

2. Circuit de commande selon la revendication 1, **caractérisé en ce que** le deuxième régulateur de tension (186) comporte une LED.

3. Circuit de commande selon l'une quelconque des revendications précédentes, **caractérisé en ce que** le deuxième régulateur de tension (186) comporte une diode Z.

4. Circuit de commande selon la revendication 1, **caractérisé en ce qu'**au moins l'un des premier et deuxième circuits régulateurs à limitation de tension (160, 180) sont connectés par l'intermédiaire d'un coupleur optique (164, 184) au module de modulation d'impulsions en largeur (162).

5. Circuit de commande selon l'une quelconque des revendications précédentes, **caractérisé en ce que** l'unité de commande (110) peut être mise en fonctionnement avec une tension d'alimentation (VCC) pouvant être dérivée de la tension électrique auxiliaire (UH), dans lequel le deuxième circuit régulateur à limitation de tension (180) est conçu pour au moins réduire une amplitude associée à la tension d'alimentation (VCC).

6. Circuit de commande selon l'une quelconque des revendications précédentes, **caractérisé en ce que** le deuxième circuit régulateur à limitation de tension (180) est conçu pour réduire l'amplitude associée à la tension d'alimentation (VCC) à une valeur minimale nécessaire pour une aptitude au fonctionnement de l'unité de commande (110).

7. Circuit de commande selon l'une quelconque des revendications précédentes, **caractérisé en ce que** le deuxième circuit régulateur à limitation de tension (180) est conçu pour au moins réduire la première amplitude dans le mode de préparation du circuit de commande (120).
